## Europäisches Patentamt
## European Patent Office
## Office européen des brevets

(19)

(11) Veröffentlichungsnummer: **0 054 253**
**B1**

(12) **EUROPÄISCHE PATENTSCHRIFT**

(45) Veröffentlichungstag der Patentschrift:
**06.06.84**

(51) Int. Cl.³: **F 16 H  3/60,** B 60 K  17/08

(21) Anmeldenummer: **81110273.0**

(22) Anmeldetag: **09.12.81**

(54) **Umkehrgetriebe.**

(30) Priorität: **15.12.80  US 216032**

(43) Veröffentlichungstag der Anmeldung:
**23.06.82 Patentblatt 82/25**

(45) Bekanntmachung des Hinweises auf die Patenterteilung:
**06.06.84 Patentblatt 84/23**

(84) Benannte Vertragsstaaten:
**DE FR GB IT SE**

(56) Entgegenhaltungen:
**DE - A - 2 756 144**
**DE - B - 2 224 572**
**DE - C - 67 522**
**GB - A - 1 385 623**
**US - A - 1 838 859**
**US - A - 2 959 987**

(73) Patentinhaber: **DEERE & COMPANY, 1 John Deere Road, Moline Illinois 61265 (US)**

(72) Erfinder: **Vieth, Harold Frederick, 5890 Willowood, Dubuque Iowa 52001 (US)**

(74) Vertreter: **Gramm, Werner, Prof. Dipl.-Ing. et al, Patentanwälte Gramm + Lins Theodor-Heuss-Strasse 2, D-3300 Braunschweig (DE)**

EP 0 054 253 B1

BUNDESDRUCKEREI BERLIN

**Beschreibung**

Die Erfindung betrifft ein Umkehrgetriebe, bestehend aus

— einem Gehäuse, das zumindest eine eingangsseitige Sektion (vordere Sektion) und eine ausgangsseitige Sektion (hintere Sektion) aufweist, die von einem abnehmbaren hinteren Gehäusedeckel verschlossen ist;

— einem in der vorderen Gehäusesektion angeordneten Planetenradträger, der ein erstes Planetenrad aufweist, das mit einem Planetenrad kleineren Durchmessers drehfest gekuppelt ist;

— einem im Gehäuse gelagerten Sonnenrad, das aus einem ersten Sonnenritzel besteht, das drehfest auf einer sich von der vorderen zur hinteren Gehäusesektion erstreckenden Sonnenradwelle sitzt und im ständigen Eingriff mit dem ersten Planetenrad steht und aus einem zweiten Sonnenritzel, das auf der Sonnenradwelle frei drehbar gelagert ist und im ständigen Eingriff mit dem zweiten Planetenrad steht;

— einer Kupplung, die wahlweise das zweite Sonnenritzel beaufschlagt und im wesentlichen in der hinteren Gehäusesektion angeordnet ist; und aus

— einer Bremse, die in angezogener Stellung das zweite Sonnenritzel gegenüber dem Gehäuse blockiert, in gelöster Stellung seine Drehung freigibt und im wesentlichen in der hinteren Gehäusesektion angeordnet und so montiert ist, daß sich die Bremse nach Abnahme des hinteren Gehäusedeckels aus dem Gehäuse ausbauen läßt.

Soweit vorstehend oder nachfolgend zur Beschreibung des Getriebes die Bezeichnungen »vordere« bzw. »hintere« benutzt werden, so sollen hiermit jeweils der eingangsseitige bzw. ausgangsseitige Bereich des Getriebes auf Eingangs- und Ausgangswelle, gekennzeichnet werden.

Das vorstehend beschriebene Getriebe läßt sich der US-Patentschrift 1 838 859 entnehmen. Die Lagerung des Planetenradträgers ist in dieser Druckschrift nicht näher offenbart. Kupplung und Bremse sind in verhältnismäßig großem axialem Abstand voneinander angeordnet, so daß sich nach Abnahme des hinteren Gehäusedeckels zwar die Bremse, deren Gehäuse weitgehend von dem Gehäusedeckel gebildet wird, nicht aber die Kupplung ausbauen läßt, deren Gehäuse mit dem Planetenradträger verschraubt ist. Die Kupplung kuppelt wahlweise das zweite Sonnenritzel mit dem Planetenradträger.

Die US-Patentschrift 3 614 902 offenbart ein Planetenradgetriebe, dessen Gehäuse aus einer vorderen, mittleren und hinteren Sektion besteht. Die vordere Sektion umschließt im wesentlichen einen Drehmomentwandler, während in der mittleren Sektion ein Planetenradträger gelagert ist. Die hintere Gehäusesektion ist von einem abnehmbaren hinteren Gehäusedeckel verschlossen und umschließt Bremsen und Kupplungen, die radial zueinander angeordnet sind und dadurch eine kurze axiale Bauweise ermöglichen. Ein erstes Planetenrad ist mit einem zweiten Planetenrad gleichen Durchmessers drehfest gekuppelt. Ein erstes Sonnenritzel sitzt drehfest auf einer sich von der vorderen zur hinteren Gehäusesektion erstreckenden Sonnenradwelle und steht im ständigen Eingriff mit dem zweiten Planetenrad. Ein zweites Sonnenritzel sitzt auf einer die Sonnenradwelle koaxial umschließenden Polwelle und steht im ständigen Eingriff mit dem ersten Planetenrad. Mit dem Getriebe lassen sich drei Vorwärts- und ein Rückwärtsgang schalten. Der Planetenradträger steht üblicherweise in fester Drehverbindung mit dem ersten Sonnenrad, kann aber von diesem durch Betätigung einer Bremse getrennt werden.

Vorgesehen sind insgesamt drei Kupplungen und zwei Bremsen, von denen durch Abnahme des hinteren Gehäusedeckels lediglich die dritte Kupplung sowie die zweite Bremse zugänglich sind und sich ausbauen lassen. Die beiden ersten Kupplungen liegen innerhalb des geschweißten Gehäuses des Drehmomentwandlers und lassen sich daher überhaupt nicht warten. Die erste Bremse wird erst dann zugänglich, wenn auch das Gehäuse des Planetenradgetriebes auseinandergenommen wird.

Der Erfindung liegt somit die Aufgabe zugrunde, das eingangs erläuterte Umkehrgetriebe so zu verbessern, daß sich alle Kupplungen und/oder Bremsen ausbauen lassen, ohne zuvor das gesamte Umkehrgetriebe abbauen zu müssen.

Diese Aufgabe wird gemäß der Erfindung dadurch gelöst, daß der Planetenradträger in der vorderen Gehäusesektion gelagert ist, während die Kupplung, die wahlweise das zweite Sonnenritzel mit der Sonnenradwelle kuppelt, in der hinteren Gehäusesektion so montiert ist, daß sie sich nach Abnahme des hinteren Gehäusedeckels aus dem Gehäuse ausbauen läßt.

Bei der erfindungsgemäßen Ausführungsform lassen sich daher nach Abnahme des hinteren Gehäusedeckels alle Kupplungs- und Bremsteile warten. Hierfür braucht das Umkehrgetriebe nicht ausgebaut zu werden. Aus- und Einbau der Kupplungen und Bremsen sind ohne Störung des Planetenradgetriebes möglich. Auch die Sonnenradwelle, die als Ausgangswelle dient, läßt sich ohne Störung der Sonnenritzel aus- und einbauen.

Erfindungsgemäß rotiert das zweite Planetenrad mit der gleichen Umdrehungszahl wie das erste Planetenrad.

Die Kupplung kann aus folgenden Teilen bestehen:

a) Eine Kupplungsnabe sitzt drehfest auf der Sonnenradwelle;

b) eine Kupplungstrommel sitzt drehfest auf dem zweiten Sonnenritzel;

c) Kupplungselemente kuppeln wahlweise die Kupplungsnabe mit der Kupplungstrommel.

Dabei ist es zweckmäßig, wenn die vordere Gehäusesektion von der hinteren Gehäusesektion durch eine Gehäusewandung getrennt ist, und daß die Sonnenradwelle sich bis durch den hinteren Gehäusedeckel erstreckt und hier drehbar gelagert ist.

Die Kupplungselemente können aus folgenden Teilen bestehen:

a) Mehrere erste Friktionsscheiben sind auf der äußeren Mantelfläche der Kupplungsnabe drehfest, aber in Axialrichtung verschiebbar montiert;

b) mehrere zweite Friktionsscheiben sind zwischen den ersten Friktionsscheiben angeordnet;

c) die zweiten Friktionsscheiben sind auf einer Gleitführung ausschließlich in axialer Richtung verschiebbar;

d) ein Kupplungs-Ringkolben ist neben den ersten und zweiten Friktionsscheiben angeordnet;

e) in einer Gleitführung ist der Kupplungs-Ringkolben gelagert, der in seiner Kupplungsstellung gegen die ersten und zweiten Friktionsscheiben drückt, sich aber in seiner gelösten Stellung im Abstand von ihnen befindet;

f) eine Feder drückt den Kupplungs-Ringkolben in seine die Kupplung lösende Stellung;

g) eine Betätigungseinrichtung zur Verschiebung des Kupplungs-Ringkolbens in seine Kupplungsstellung.

Die ersten Friktionsscheiben sind somit nur senkrecht zur Kupplungsnabe verschiebbar. Die den Kupplungs-Ringkolben beaufschlagende Feder kann grundsätzlich eine federelastische Einrichtung sein.

Die Bremse kann aus folgenden Teilen bestehen:

a) Auf der äußeren Mantelfläche der Kupplungstrommel sind mehrere dritte Friktionsscheiben drehfest, aber in Axialrichtung verschiebbar montiert;

b) mehrere Gleitführungszapfen sind in jeweils miteinander fluchtenden Bohrungen in der hinteren Gehäusesektion und im hinteren Gehäusedeckel festgelegt;

c) an den Gleitführungszapfen sind mehrere vierte Friktionsscheiben verschiebbar geführt, die zwischen die dritten Friktionsscheiben ragen;

d) in einer Ausnehmung des hinteren Gehäusedeckels ist ein Brems-Ringkolben verschiebbar gelagert, der in seiner Bremsstellung gegen die dritten und vierten Friktionsscheiben drückt, in seiner gelösten Stellung aber im Abstand von ihnen liegt;

e) eine Betätigungseinrichtung zur Verschiebung des Brems-Ringkolbens in seine Bremsstellung.

Eine spezielle Ausführungsform der Erfindung kann durch folgende Merkmale gekennzeichnet sein:

a) Die vordere Gehäusesektion ist durch eine im Gehäuse lösbar befestigte vordere Trennwandung in einen ersten und einen zweiten vorderen Gehäuseraum unterteilt, während letzterer über eine feste hintere Gehäusewandung von der hinteren Gehäusesektion abgeteilt ist;

b) der Planetenradträger ist im zweiten vorderen Gehäuseraum angeordnet und in der vorderen Trennwand und hinteren Gehäusewandung gelagert;

c) in der vorderen Trennwandung ist eine sich durch sie hindurcherstreckende Eingangswelle drehbar gelagert, die von einem im ersten vorderen Gehäuseraum angeordneten Antrieb angetrieben wird und mit dem Sonnenradträger in Drehverbindung steht;

d) die Sonnenradwelle ist zentrisch zum Planetenradträger angeordnet und fluchtet mit der Eingangswelle;

e) das zweite Sonnenritzel ragt mit einer sich nach hinten erstreckenden Buchse in eine Ausnehmung in der hinteren Gehäusewandung;

f) die Kupplungstrommel übergreift mit einem sich nach vorn erstreckenden Ringbund die Buchse des zweiten Sonnenritzels und ist mit dieser drehfest verbunden;

g) eine Feder drückt die beiden jeweils außen liegenden Friktionsscheiben der dritten und vierten Friktionsscheiben einerseits gegen die hintere Gehäusewandung und andererseits gegen einen Abschnitt des hinteren Gehäusedeckels;

h) die Gleitführung für die zweiten Friktionsscheiben werden durch die Schäfte der Deckelschrauben gebildet, die in entsprechende Ausnehmungen im äußeren Rand der zweiten Friktionsscheiben eingreifen.

Weitere Merkmale der Erfindung sind Gegenstand der Unteransprüche und werden mit weiteren Vorteilen der Erfindung anhand eines Ausführungsbeispieles erläutert.

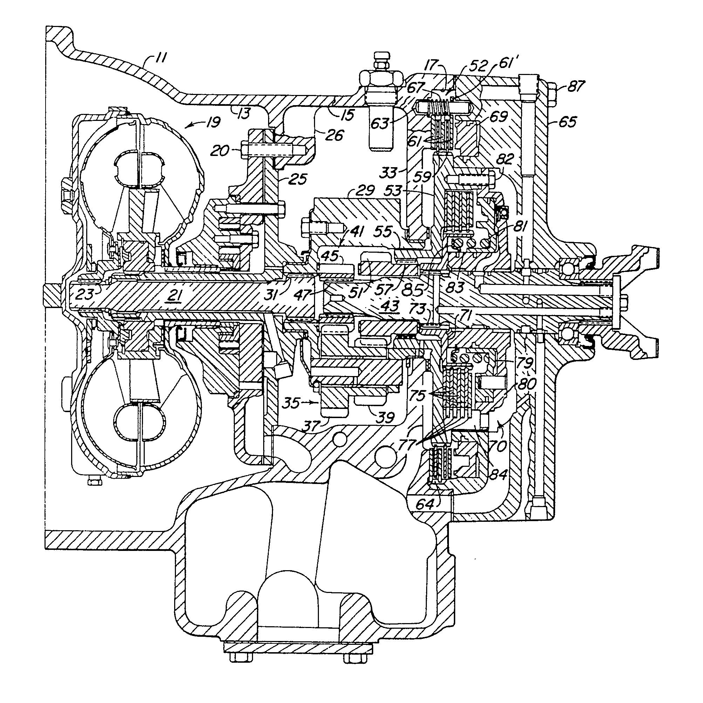

In der Zeichnung ist eine als Beispiel dienende Ausführungsform der Erfindung im Längsschnitt dargestellt.

Ein Gehäuse 11 besteht aus einer vorderen Gehäusesektion 13, 15 und einer hinteren Gehäusesektion 17, wobei die vordere Gehäusesektion in einen ersten Gehäuseraum 13 und einen zweiten Gehäuseraum 15 unterteilt ist. Im ersten Gehäuseraum 13 ist ein üblicher Drehmomentenwandler 19 fest an einer Trennwandung 25 befestigt, die über Schraubbolzen 20 lösbar an einem Gehäusebund 26 befestigt ist und die vorderen Gehäuseräume 13, 15 voneinander trennt. Der Drehmomentwandler 19 sitzt über eine Keilverbindung 23 drehfest auf einer Eingangswelle 21, die sich durch die Trennwandung 25 hindurch erstreckt und in dieser gelagert ist. Auf dem hinteren Ende der Eingangswelle 21 sitzt über eine Keilverbindung 31 drehfest ein Planetenradträger 29, der in dem zweiten vorderen Gehäuseraum 15 angeordnet und einerseits in der genannten Trennwandung 25 und andererseits in einer festen Gehäusewandung 33 gelagert ist, die den zweiten vorderen Gehäuseraum 15 von der hinteren Gehäusesektion 17 trennt. Auf dem Planetenradträger 29 sitzt drehbar ein Doppelplanetenrad 35 mit einem ersten Planetenrad 37, das mit einem zweiten Planetenrad 39 kleineren Durchmessers drehfest gekuppelt ist. Ein Sonnenrad 41 besteht aus einer Sonnenradwelle 43, die mit der Eingangswelle 21 fluchtet und mit ihrem linken Ende zentrisch im Planetenradträger 29 liegt, und aus einem ersten Sonnenritzel 45 und einem zweiten Sonnenritzel 51. Das erste Sonnenritzel 45 sitzt über eine Keilverbindung 47 drehfest auf der Sonnenradwelle 43 und steht ständig im Eingriff mit dem ersten Planetenrad 37. Das zweite Sonnenritzel 51 ist frei drehbar auf der Sonnenradwelle 43 gelagert, weist von dem ersten Sonnenritzel 45 einen geringen lichten Abstand auf und steht ständig im Eingriff mit dem zweiten Planetenrad 39.

Zur Bildung einer Bremse 52 ist eine Kupplungstrommel 53 vorgesehen, die im wesentlichen scheibenförmig ausgebildet ist und einen sich nach vorn erstreckenden Ringbund 55 aufweist, der über eine Keilverbindung 57 drehfest auf einer sich nach hinten erstreckenden Buchse des zweiten Sonnenritzels 51 sitzt. Die Kupplungstrommel 53 ist parallel zur Gehäusewandung 33 und hinter dieser innerhalb der hinteren Gehäusesektion 17 angeordnet. Auf der äußeren Mantelfläche der Kupplungstrommel 53 sind zwei Friktionsscheiben 59 drehfest, aber in Axialrichtung verschiebbar montiert. Zwischen diesen beiden Friktionsscheiben 59 ragt eine Friktionsscheibe 61, während zwei weitere Friktionsscheiben 61 und 61' gegen die Außenseite der beiden Friktionsscheiben 59 anliegen. Die Friktionsscheiben 61 sind verschiebbar gelagert an Gleitführungszapfen 63, die in jeweils miteinander fluchtenden Bohrungen in der hinteren Gehäusesektion 17 und in einem hinteren Gehäusedeckel 65 festgelegt sind, der die hintere Gehäusesektion 17 verschließt. Die Sonnenradwelle 43 erstreckt sich durch diesen hinteren Gehäusedeckel 65 hindurch und ist in diesem drehbar gelagert. Die Friktionsscheiben 61 sind entlang von Schlitzen 64 im hinteren Gehäusedeckel 65 verschiebbar, wobei die außenliegende Friktionsscheibe 61' an den Gleitführungszapfen 63 entlang gleitet und von einer Feder 67 nach hinten gegen einen Abschnitt des hinteren Gehäusedeckels 65 gedrückt wird. Ein Brems-Ringkolben 69 ist gegenüber der Friktionsscheibe 61' in einer seiner Außenkontur entsprechenden Ausnehmung im hinteren Gehäusedeckel 65 verschiebbar geführt und wird in üblicher Weise hydraulisch betätigt, um die Bremstrommel 53 gegenüber dem Gehäuse 11 zu blockieren.

Zur Bildung einer Kupplung 70 ist eine Kupplungsnabe 71 vorgesehen, die über eine Keilverbindung 73 drehfest mit der Sonnenradwelle 43 verbunden ist und im wesentlichen in der hinteren Gehäusesektion 17 liegt. Auf der äußeren Mantelfläche der Kupplungsnabe 71 sind mehrere Friktionsscheiben 75 drehfest, aber in Axialrichtung verschiebbar montiert. Zwischen diesen Friktionsscheiben 75 ragen Friktionsscheiben 77. Hinter der Kupplungsnabe 71 ist auf der Sonnenradwelle 43 eine Kupplungsabdeckung 80 frei drehbar gelagert, die über mehrere Deckelschrauben 82 mit der Kupplungstrommel 53 verschraubt ist. Die Friktionsscheiben 77 und 75 liegen somit zwischen der Kupplungstrommel 53 und der Kupplungsabdeckung 80, wobei die Friktionsscheiben mittels entsprechenden Ausnehmungen am äußeren Rand in axialer Richtung auf den Schäften der Deckelschrauben 82 gleiten. Neben den Friktionsscheiben 75, 77 ist ein Kupplungs-Ringkolben 79 angeordnet, der in einem seiner Außenkontur angepaßten Hohlraum der Kupplungsabdeckung 80 verschiebbar geführt ist und in üblicher Weise hydraulisch beaufschlagt wird, um die Kupplungsnabe 71 mit der Kupplungstrommel 53 zu kuppeln. Eine Feder 81 drückt den Kupplungs-Ringkolben 79 in seine gelöste Stellung. Die Feder 81 sitzt auf einer Buchse 83 der Kupplungsabdeckung 80 und stützt sich einerseits an einem Anschlag 85 und andererseits an dem Kupplungs-Ringkolben 79 ab.

Durch Beaufschlagung des Kupplungs-Ringkolbens 79 wird die Kupplungsnabe 71 mit der Kupplungstrommel 53 gekuppelt, so daß zweites Sonnenritzel 51, Kupplungstrommel 53, Kupplungsnabe 71 und Sonnenradwelle 43 als Einheit rotieren. Der Planetenradträger 29 rotiert in gleicher Umdrehungsrichtung wie die Eingangswelle 21. Die Planetenräder 37, 39 wollen die Sonnenritzel 45, 51 mit unterschiedlichen Umdrehungszahlen drehen, können dies aber nicht, da die Sonnenritzel 45, 51 mit der Sonnenradwelle 48 gekuppelt sind, die somit vom Planetenradträger 29 in gleicher Richtung gedreht wird. Wird der Kupplungs-Ringkolben 79 gelöst und dann der Brems-Ringkolben 69 betätigt, wird das zweite Sonnenritzel 51 gegenüber dem Gehäuse 11 blockiert. Da die Eingangswelle 21 den Planetenradträger 29 dreht, muß das Planetenrad 39 um das zweite Sonnenritzel 51 herumlaufen und bewirkt dadurch, daß das Planetenrad 37 die Sonnenradwelle 42 gegenüber dem Planetenradträger 29 in entgegengesetzter Richtung dreht.

Der hintere Gehäusedeckel 65 ist mit dem Gehäuse 11 über mehrere Schraubbolzen 87 verbunden. Durch Lösung dieser Bolzen 87 läßt sich der Deckel 65 abnehmen, wodurch gleichzeitig die Sonnenritzel 41,51, die Kupplung 70 und die Bremse 52 demontiert werden.

Aus vorstehender Beschreibung entnimmt ein Durchschnittsfachmann zahlreiche Möglichkeiten zur Modifizierung des Ausführungsbeispieles; alle Abwandlungen sollen durch die Patentansprüche erfaßt sein.

**Patentansprüche:**

1. Umkehrgetriebe, bestehend aus

- einem Gehäuse (11), das zumindest eine eingangsseitige Sektion (vordere Sektion 13, 15) und eine ausgangsseitige Sektion (hintere Sektion 17) aufweist, die von einem abnehmbaren hinteren Gehäusedeckel (65) verschlossen ist;
- einem in der vorderen Gehäusesektion (13, 15) angeordneten Planetenradträger (29), der ein erstes Planetenrad (37) aufweist, das mit einem zweiten Planetenrad (39) kleineren Durchmessers drehfest gekuppelt ist;
- einem im Gehäuse (11) drehbar gelagerten Sonnenrad (41), das aus einem ersten Sonnenritzel (45) besteht, das drehfest auf einer sich von der vorderen zur hinteren Gehäusesektion (13, 15, 17) erstreckenden Sonnenradwelle (43) sitzt und im ständigen Eingriff mit dem ersten Planetenrad (37) steht und aus einem zweiten Sonnenritzel (51), das auf der Sonnenradwelle (43) frei drehbar gelagert ist und im ständigen Eingriff mit dem zweiten Planetenrad (39) steht;
- einer Kupplung (70), die wahlweise das zweite Sonnenritzel (51) beaufschlagt und im wesentlichen in der hinteren Gehäusesektion (17) angeordnet ist; und aus
- einer Bremse (52), die in angezogener Stellung das zweite Sonnenritzel (51) gegenüber dem Gehäuse (11) blockiert, in gelöster Stellung seine Drehung freigibt und im wesentlichen in der hinteren Gehäusesektion (17) angeordnet und so montiert ist, daß sich die Bremse (52) nach Abnahme des hinteren Gehäusedeckels (65) aus dem Gehäuse (11) ausbauen läßt;

dadurch gekennzeichnet, daß der Planetenradträger (29) in der vorderen Gehäusesektion (13, 15) gelagert ist, während die Kupplung (70), die wahlweise das zweite Sonnenritzel (51) mit der Sonnenradwelle (43) kuppelt, in der hinteren Gehäusesektion (17) so montiert ist, daß sie sich nach Abnahme des hinteren Gehäusedeckels (65) aus dem Gehäuse (11) ausbauen läßt.

2. Umkehrgetriebe nach Anspruch 1, dadurch gekennzeichnet, daß die Kupplung (70) aus folgenden Teilen besteht:

a) Eine Kupplungsnabe (71) sitzt drehfest auf der Sonnenradwelle (43);
b) eine Kupplungstrommel (53) sitzt drehfest auf dem zweiten Sonnenritzel (51);
c) Kupplungselemente (75, 77) kuppeln wahlweise die Kupplungsnabe (71) mit der Kupplungstrommel (53).

3. Umkehrgetriebe nach Anspruch 1 oder 2, dadurch gekennzeichnet, daß die Bremse (52) wahlweise eine drehfest auf dem zweiten Sonnenritzel (51) sitzende Kupplungstrommel (53) beaufschlagt.

4. Umkehrgetriebe nach Anspruch 1, 2 oder 3, dadurch gekennzeichnet, daß die vordere Gehäusesektion (13, 15) von der hinteren Gehäusesektion (17) durch eine Gehäusewandung (33) getrennt ist, und daß die Sonnenradwelle (43) sich bis durch den hinteren Gehäusedeckel (65) erstreckt und hier drehbar gelagert ist.

5. Umkehrgetriebe nach Anspruch 2, 3 oder 4, dadurch gekennzeichnet, daß die Kupplungselemente (75−82) aus folgenden Teilen bestehen:

a) Mehrere erste Friktionsscheiben (75) sind auf der äußeren Mantelfläche der Kupplungsnabe (71) drehfest, aber in Axialrichtung verschiebbar montiert;
b) mehrere zweite Friktionsscheiben (77) sind zwischen den ersten Friktionsscheiben (75) angeordnet;
c) die zweiten Friktionsscheiben (77) sind auf einer Gleitführung (82) ausschließlich in axialer Richtung verschiebbar;
d) ein Kupplungs-Ringkolben (79) ist neben den ersten und zweiten Friktionsscheiben (75, 77) angeordnet;
e) in einer Gleitführung ist der Kupplungs-Ringkolben (79) gelagert, der in seiner Kupplungsstellung gegen die ersten und zweiten Friktionsscheiben (75, 77) drückt, sich aber in seiner gelösten Stellung im Abstand von ihnen befindet;
f) eine Feder (81) drückt den Kupplungs-Ringkolben (79) in seine die Kupplung lösende Stellung;
g) eine Betätigungseinrichtung zur Verschiebung des Kupplungs-Ringkolbens (79) in seine Kupplungsstellung.

6. Umkehrgetriebe nach Anspruch 5, dadurch gekennzeichnet, daß die genannte Gleitführung für den Kupplungs-Ringkolben (79) aus folgenden Teilen besteht:

a) Hinter der Kupplungsnabe (71) ist auf der Sonnenradwelle (43) eine Kupplungsabdeckung (80) frei drehbar gelagert;
b) die Kupplungsabdeckung (80) ist über mehrere Deckelschrauben (82) mit der Kupplungstrommel (53) verschraubt und weist einen der Außenkontur des Kupplungs-Ringkolbens (79) angepaßten Hohlraum auf, in dem der Kupplungs-Ringkolben axial verschiebbar gelagert ist.

7. Umkehrgetriebe nach einem der vorhergehenden Ansprüche, dadurch gekennzeichnet, daß die Bremse (52) aus folgenden Teilen besteht:

a) Auf der äußeren Mantelfläche der Kupplungstrommel (53) sind mehrere dritte Friktionsscheiben (59) drehfest, aber in Axialrichtung verschiebbar montiert;
b) mehrere Gleitführungszapfen (63) sind in jeweils miteinander fluchtenden Bohrungen in der hinteren Gehäusesektion (17) und im hinteren Gehäusedeckel (65) festgelegt;

c) an den Gleitführungszapfen (63) sind mehrere vierte Friktionsscheiben (61) verschiebbar geführt, die zwischen die dritten Friktionsscheiben (59) ragen;

d) in einer Ausnehmung des hinteren Gehäusedeckels (65) ist ein Brems-Ringkolben (69) verschiebbar gelagert, der in seiner Bremsstellung gegen die dritten und vierten Friktionsscheiben (59, 61) drückt, in seiner gelösten Stellung aber im Abstand von ihnen liegt;

e) eine Betätigungseinrichtung zur Verschiebung des Brems-Ringkolbens (69) in seine Bremsstellung.

8. Umkehrgetriebe nach Anspruch 7, dadurch gekennzeichnet, daß die dritten und vierten Friktionsscheiben (59, 61) von einer Feder (67) im Abstand voneinander gehalten werden, wenn der Brems-Ringkolben (69) seine gelöste Stellung einnimmt.

9. Umkehrgetriebe nach einem der vorhergehenden Ansprüche, gekennzeichnet durch folgende Merkmale:

a) Die vordere Gehäusesektion (13, 15) ist durch eine im Gehäuse (11) lösbar befestigte vordere Trennwandung (25) in einen ersten (13) und einen zweiten (15) vorderen Gehäuseraum unterteilt, während letzterer über eine feste hintere Gehäusewandung (25) von der hinteren Gehäusesektion (17) abgeteilt ist;

b) der Planetenradträger (29) ist im zweiten vorderen Gehäuseraum (15) angeordnet und in der vorderen Trennwandung (25) und hinteren Gehäusewandung (33) gelagert;

c) in der vorderen Trennwandung (25) ist eine sich durch sie hindurcherstreckende Eingangswelle (21) drehbar gelagert, die von einem im ersten vorderen Gehäuseraum (13) angeordneten Antrieb (19) angetrieben wird und mit dem Sonnenradträger (29) in Drehverbindung steht;

d) die Sonnenradwelle (43) ist zentrisch zum Planetenradträger (29) angeordnet und fluchtet mit der Eingangswelle (21);

e) das zweite Sonnenritzel (39) ragt mit einer sich nach hinten erstreckenden Buchse in eine Ausnehmung in der hinteren Gehäusewandung (33);

f) die Kupplungstrommel (53) übergreift mit einem sich nach vorn erstreckenden Ringbund (55) die Buchse des zweiten Sonnenritzels (39) und ist mit dieser drehfest verbunden;

g) eine Feder (67) drückt die beiden jeweils außen liegenden Friktionsscheiben (61') der dritten und vierten Friktionsscheiben (59, 61) einerseits gegen die hintere Gehäusewandung (33) und andererseits gegen einen Abschnitt des hinteren Gehäusedeckels (65);

h) die Gleitführung für die zweiten Friktionsscheiben (77) werden durch die Schäfte der Deckelschrauben (82) gebildet, die in entsprechende Ausnehmungen im äußeren Rand der zweiten Friktionsscheiben (77) eingreifen.

**Claims**

1. A reverser comprising

— a housing (11) having at least on the input side a section (forward section 13, 15) and on the output side another section (rear section 17), closed by a detachably mounted rear cover (65);

— a carrier (29) arranged in said housing forward section (13, 15) including a first planetary pinion (37) drivingly coupled to a second planetary pinion (39) of smaller diameter;

— a sun gear (41) rotatably mounted in said housing (11), including a first sun pinion (45) drivingly mounted on a sun gear shaft (43) which extends from said forward section (13, 15) to said rear section (17), said first sun pinion in constant mesh with said first planetary pinion (37), and a second sun pinion (51) rotatably mounted on said sun gear shaft (43) and in constant mesh with said second planetary pinion (39);

— clutching means (70) selctively acting upon said second sun pinion and being located generally within said rear section (17); and

— braking means (52) causing in braking position said second sun pinion (51) to assume a locked position with respect to said housing (11) and in release position to assume an unlocked nonstationary position; said braking means to be located generally within said rear section (17) of said housing (11) and supported therein such that removal of said rear cover (65) allows removal of said braking means (52) from said housing (11);

characterized in that said carrier (29) is mounted in said housing forward section (13, 15), while said clutching means (70) for selectively coupling or uncoupling said second sun pinion (51) to said sun gear shaft (43) is mounted within said rear section (17) of said housing (11) such that removal of said rear cover (65) allows removal of said braking means (52) from said housing (11).

2. A reverser as claimed in claim 1, wherein said clutching means (70) comprises:

a) a clutch hub (71) drivingly mounted on said sun gear shaft (43);

b) a clutch drum (53) drivingly mounted on said second sun pinion;

c) clutch means (75, 77) for selectively clutching said clutch hub (71) to said clutch drum (53).

3. A reverser as claimed in claim 1 or 2, wherein said braking means (52) selectively acting upon a clutch drum (53) drivingly mounted on said second sun pinion.

4. A reverser as claimed in claim 1, 2 or 3, wherein said forward section (13, 15) and said rear section (17) are divided by a housing wall (33) and wherein said sun gear shaft (43) extends through said rear cover (65) being rotatably mounted therein.

5. A reverser as claimed in claim 2, 3 or 4, wherein said clutch means (75—82) comprises:

a) a plurality of first friction discs (75) drivingly, but axially slidably mounted on the outer periphery of said clutch hub (71);

b) a plurality of second friction discs (77) interspersed between said first friction discs (75);

c) said second friction discs (77) slidably mounted on a sliding guide (82) only in an axial direction;

d) a clutch piston ring (79) opposite to said first and second friction discs (75, 77);

e) said clutch piston ring (79) mounted in a sliding guide and to assume a clutch engaged position biasing against said first and second friction discs (75, 77) and a disenganged position spaced apart from said first and second friction discs;

f) biasing means (81) for biasing said clutch piston ring (79) in a disengaged position releasing the clutch;

g) actuating means for sliding said clutch piston ring (79) to said engaged position.

6. A reverser as claimed in claim 5, wherein said sliding guide for said clutch piston ring (79) comprises:

a) a clutch cover (80) rotatably mounted on said sun shaft (43) rearwardly beyond said clutch hub (71);

b) a plurality of cap screws (82) fixably mounting said clutch cover (80) to said clutch drum (53), said clutch cover including a cavity conforming to said clutch piston ring configuration to allow said clutch piston ring (79) to slide axially within said cavity.

7. A reverser as claimed in one of the preceding claims, wherein said braking means (52) comprises:

a) a plurality of third friction discs (59) drivingly, but axially slidably mounted on the outer periphery of said clutch drum (53);

b) a plurality of mounting pins (63) fixed in a plurality of co-linearly aligned holes in said housing rear section (17) and said rear cover (65);

c) a plurality of fourth friction discs (61) slidably suspended from said pin (63) interspersed between said third friction discs (59);

d) a brake piston ring (69) slidably mounted in a cavity of said rear cover (65) to assume a clutch engaged position biasing against said third and fourth friction discs (59, 61) and a disengaged position spaced apart from said discs; and

e) actuating means for sliding said brake piston ring (69) to an engaged position.

8. A reverser as claimed in claim 7 further comprising a biasing means (67) for biasing said third and fourth friction discs (59, 61) to assume spaced apart relationship when said brake piston ring (69) assumes a disengaged position.

9. A reverser as claimed in one of the preceding claims, comprising:

a) a forward wall (25) detachably mounted in said housing (11) dividing said forward section (13, 15) into a first forward section (13) and a second forward section (15), whereby said second forward section (15) and said rear section (17) are divided by a fixed rear housing wall (33);

b) said carrier (29) rotatably mounted in said forward wall (25) and said rear wall (33) located in said second forward section (15);

c) an input shaft (21) rotatably mounted in and extending through said forward wall (25) drivingly rotated by driving means (19) located in said first forward section (13) and drivingly coupled to said carrier (29);

d) said sun shaft (43) co-linear to said input shaft (21) and located centrally to said carrier (29);

e) said second sun pinion (39) having a rearwardly axially extending bush which extends into a hole of said rearwall (33);

f) said clutch drum (53) having a centrally located forward facing collar (55) overlapping said bush of said second sun pinion (39) and being drivingly mounted to said bush;

g) biasing means (67) for biasing said axially extreme friction discs (61') of said third and fourth friction discs (59, 61) apart such that one said extreme friction disc is biased against said rear wall (33) and the other extreme friction disc (61') is biased against a portion of said rear cover (65);

h) said sliding guide for said second friction discs (77) being the shafts of said cap screws (82) engaging related recesses spaced around the outer peripheral edge of said second friction discs (77).

## Revendications

1. Mécanisme à inversion de marche constitué par:

— un carter (11) qui comprend au moins une partie dirigée du côté entrée (partie avant 13, 15) et une partie dirigée du côté sortie (partie arrière 17), qui est fermée par un couvercle de carter arrière amovible (65);

— un porte-satellites (29) disposé dans la partie de carter avant (13, 15), qui comprend un premier satellite (37) angulairement solidaire d'un second satellite (39) de plus petit diamètre;

— un planétaire (41) monté à rotation dans le carter (11), constitué par un premier pignon de planétaire (45) qui est calé angulairement sur un arbre de planétaire (43) s'étendant depuis la partie avant du carter jusqu'à la partie arrière (13, 15, 17) et qui engrène de façon permanente avec le premier satellite (37), et par un second pignon de planétaire (51), qui est monté fou sur l'arbre de planétaire (43) et qui engrène de façon permanente avec le second satellite (39);

— un accouplement (70) qui agit sélectivement sur le second pignon de planétaire (51) et qui est disposé principalement dans la partie de carter arrière (17); et

— un frein (52) qui, en position serrée, bloque le second pignon de planétaire (51) par rapport au carter (11) tout en permettant sa libre rotation en position desserrée, et qui est disposé principalement dans la partie de carter arrière (17) et monté de telle sorte que le frein (52) puisse être dégagé du carter (11) après dépose du couvercle de carter arrière (65);

caractérisé en ce que le porte-satellites (29) est tourillonné dans la partie de carter avant (13, 15), tandis que l'accouplement (70), qui accouple sélectivement le second pignon de planétaire (51) avec l'arbre de planétaire (43), est monté dans la partie de carter arrière (17) de façon telle qu'il puisse être dégagé du carter (11) après dépose du couvercle de carter arrière (65).

2. Mécanisme à inversion de marche suivant la revendication 1, caractérisé en ce que l'accouplement (70) est formé par les éléments suivants:

a) un moyeu d'accouplement (71) est calé angulairement sur l'arbre de planétaire (43);

b) un tambour d'accouplement (53) est calé angulairement sur le second pignon de planétaire (51);

c) des éléments d'accouplement (75, 77) accouplent sélectivement le moyeu d'accouplement (71) avec le tambour d'accouplement (53).

3. Mécanisme à inversion de marche suivant la revendication 1 ou 2, caractérisé en ce que le frein (52) attaque sélectivement un tambour d'accouplement (53) calé angulairement sur le second pignon de planétaire (51).

4. Mécanisme à inversion de marche suivant la revendication 1, 2 ou 3, caractérisé en ce que la partie avant (13, 15) du carter est séparée de la partie arrière (17) par une cloison (33) et en ce que l'arbre de planétaire (43) s'étend jusqu'à travers le couvercle de carter arrière (65) et est tourillonné dans celui-ci.

5. Mécanisme à inversion de marche suivant la revendication 2, 3 ou 4, caractérisé en ce que les éléments d'accouplement (75—82) sont constitués par les éléments suivants:

a) plusieurs premiers disques de friction (75) sont calés angulairement sur la périphérie extérieure du moyeu d'accouplement (71) mais sont déplaçables dans le sens axial sur celui-ci;

b) plusieurs seconds disques de friction (77) sont disposés entre les premiers disques de friction (75);

c) les seconds disques de friction (77) sont déplaçables sur un guide formant coulisse (82) uniquement dans le sens axial;

d) un piston d'accouplement annulaire (79) est disposé à côté des premiers et seconds disques de friction (75, 77);

e) le piston d'accouplement annulaire (79) est monté dans un guide formant coulisse et exerce une pression, dans sa position d'accouplement, sur les premiers et seconds disques de friction (75, 77), mais se trouve écarté de ceux-ci dans sa position de repos;

f) un ressort (81) repousse le piston d'accouplement annulaire (79) dans sa position de dégagement de l'accouplement;

g) un dispositif d'actionnement pour déplacer le piston d'accouplement annulaire (79) jusque dans sa position d'accouplement.

6. Mécanisme à inversion de marche suivant la revendication 5, caractérisé en ce que le guide formant coulisse précité, destiné au piston d'accouplement annulaire (79), comprend les éléments suivants:

a) une cloche d'accouplement (80) est montée folle sur l'arbre de planétaire (43) derrière le moyeu d'accouplement (71);

b) la cloche d'accouplement (80) est reliée par vissage au tambour d'accouplement (53) par plusiers vis ou boulons (82) et présente une cavité adaptée au contour extérieur du piston d'accouplement annulaire (79), ce piston d'accouplement étant monté de façon à pouvoir coulisser axialement dans cette cavité.

7. Mécanisme à inversion de marche suivant l'une quelconque des revendications précédentes, caractérisé en ce que le frein (52) est constitué par les éléments suivants:

a) plusieurs troisièmes disques de frictions (59) sont calés angulairement sur la périphérie extérieure du tambour d'accouplement (53), mais sont déplaçables axialement sur celui-ci;

b) plusieurs axes de guidage (63) sont immobilisés dans des perçages chaque fois alignés de la partie de carter arrière (17) et du couvercle de carter arrière (65);

c) plusieurs quatrièmes disques de friction (61) sont guidés de façon à pouvoir coulisser sur ces axes (63) et font saillie entre les troisièmes disques de friction (59);

d) un piston de frein annulaire (69) est monté de façon déplaçable dans un évidement du couvercle de carter arrière (65), ce piston exerçant une pression sur les troisièmes et quatrièmes disques de friction (59, 61) dans sa position de freinage et étant écarté de ces disques dans sa position de repos;

e) un dispositif d'actionnement pour déplacer le piston de frein annulaire (69) jusque dans sa position de freinage.

8. Mécanisme à inversion de marche suivant la revendication 7, caractérisé en ce que les troisièmes et quatrièmes disques de friction (59, 61) sont écartés l'un de l'autre par un ressort (67) quand le piston de frein annulaire (69) se trouve dans sa position de repos.

9. Mécanisme à inversion de marche suivant l'une quelconque des revendications précédentes, caractérisé, par les particularités suivantes:

a) la partie de carter avant (13, 15) est subdivisée par une cloison avant (25) fixée amoviblement dans le carter (11) en une première (13) et une seconde (15) chambres de carter avant, tandis que cette dernière est séparée de la partie de carter arrière (17) par une cloison arrière fixe (33);

b) le porte-satellites (29) est monté dans la seconde chambre de carter avant (15) et est tourillonné dans la cloison avant (25) et la cloison arrière (33);

c) un arbre d'entrée (21) s'étend à travers la cloison avant (25) et est tourillonné dans celle-ci, cet arbre étant entraîné par un organe d'entraînement (19) disposé dans la première chambre de carter avant (13) et étant relié angulairement au porte-satellites (29);

d) l'arbre de planétaire (43) est disposé centralement par rapport au porte-satellites (29) et est aligné avec l'arbre d'entrée (21);

e) le second pignon de planétaire (51) fait saillie par une queue s'étendant vers l'arrière dans un évidement prévu dans la cloison arrière (33);

f) le tambour d'accouplement (53) chevauche par sa collerette annulaire (55) s'étendant vers l'avant la queue du second pignon de planétaire (51) et est angulairement solidaire de celle-ci;

g) un ressort (67) repousse les deux disques de friction (61') disposés chaque fois à l'extérieur parmi les troisièmes et quatrièmes disques de friction (59, 61) d'une part contre la cloison arrière (33) et d'autre part contre une partie du couvercle arrière (65) du carter;

h) le guidage formant coulisse prévu pour les seconds disques de friction (77) est formé par les tiges des vis ou boulons (82) de fixation du couvercle, qui s'engagent dans des évidements appropriés prévus dans le bord extérieur des seconds disques de friction (77).